# EUROPEAN PATENT SPECIFICATION

(11) **EP 2 888 085 B1**
(45) Date of publication and mention of the grant of the patent: **11.11.2020**
(21) Application number: 12753461.8
(22) Date of filing: 22.08.2012
(51) Int. Cl.: B25J 19/02, G05D 1/00, G05D 1/02, G05D 1/10, G05B 19/418

(54) **UNMANNED VEHICLE FOR SYSTEM SUPERVISION**
UNBEMANNTES FAHRZEUG ZUR SYSTEMÜBERWACHUNG
VÉHICULE SANS PILOTE POUR SURVEILLANCE DE SYSTÈME

(43) Date of publication of application: 01.07.2015
(73) Proprietor: ABB Schweiz AG, 5400 Baden (CH)
(72) Inventor: NAEDELE, Martin, 8050 Zürich (CH)
(74) Representative: Vossius & Partner Patentanwälte Rechtsanwälte mbB
(86) International application number: PCT/EP2012/066345
(87) International publication number: WO 2014/029431

(56) References cited:
- EP-A1- 1 553 536
- EP-A1- 1 901 153
- WO-A2-2009/142933
- US-A- 5 377 106
- US-A1- 2005 075 756

## Description

### FIELD OF THE INVENTION

The invention relates to the field of control and/or monitoring of large-size distributed industrial systems.

### BACKGROUND OF THE INVENTION

SCADA (Supervisory Control And Data Acquisition) systems and/or DCS (Distributed Control Systems) are used to control and monitor industrial processes that are geographically spread over large distances, such as the transmission of electric power, water, oil, or gas, by means of interconnected transmission networks including power grids and pipelines or by means of automated discrete transportation units. Likewise, SCADA systems and DCSs are used for individual industrial plants of larger size such as mines, oil platforms, and refineries.

As in any moderately complex system, many actual or perceived problems in the aforementioned distributed industrial systems require that an operator or service technician "has a look" at a part or piece of equipment of the industrial system. However, even in presence of an acceptable road or other human transportation infrastructure, physically moving a human being to the locations takes time, costs money and may be undesirable or impossible for other reasons. Local sensors or permanently installed video cameras are therefore used, with their output being fed into the SCADA or DCS system. Other, more sophisticated sensor for specific components or gases on the other hand may not be amenable for wide-spread distribution due to cost reasons.

Remote controlled Unmanned Aerial Vehicles (UAVs) are being used today for various military and civilian purposes. UAVs require a specialized crew for maintenance and operation. In other words, albeit "autonomous" in some sense UAVs today still need a human pilot at a distance.

WO 2009/142933 A2 discloses a system for inspection of structures and objects by a swarm of remote unmanned vehicles.

EP 1 901 153 A1 discloses a control system for an unmanned 4-rotor helicopter.

### DESCRIPTION OF THE INVENTION

It is an objective of the invention to improve control and monitoring of a distributed industrial system. This objective is achieved by a Supervisory Control And Data Acquisition (SCADA) system with an unmanned vehicle as well as to a use of an unmanned vehicle in a SCADA system according to the independent claims. Preferred embodiments are evident from the dependent patent claims.

According to the invention, a SCADA system is adapted for controlling and/or monitoring a distributed industrial system based on system information obtained at inspection points or observation spots within the system, as recited in the independent claims. The distributed industrial system may be a large size industrial plant or site, and/or include an extended transmission or transportation network of a utility, with a distance between two inspection points exceeding a range of a single system information obtaining sensor. The SCADA system includes a routing module for automatically determining or calculating a navigable route or path to an inspection point. The SCADA system includes an unmanned vehicle moving physically along the determined route to the inspection point, with a sensor mounted on the vehicle for obtaining system information from the inspection point and transmitting the system information obtained. The SCADA system also includes a sensor module for remote control or operation of the sensor and for reception and processing of the system information previously obtained and transmitted by the sensor.

Target inspection points to be visited may be provided to the routing module by a human operator, e.g. by pointing to the target on a SCADA screen such as a geographical map or a logical process picture. Target inspection points may also be determined and communicated to the vehicle in an automated way, based on alarms or other events. No human pilot is needed for controlling a displacement of the vehicle in real time from a distance. The unmanned vehicle may be an Unmanned Aerial Vehicle (UAV) suitable for inspection of remote unmanned substations and/or the interconnecting high-voltage overhead power transmission lines. Alternatively, the unmanned vehicle may be a robot for driving or climbing on terrestrial missions, or a vessel for swimming or diving in marine applications.

In a preferred variant of the invention, the sensor is a visible light camera. The unmanned vehicle may carry in addition to or instead of the latter, other sensors like microphones, infrared cameras, radar, and chemical sensors.

In an advantageous embodiment of the invention, the unmanned vehicle has a propulsion means or motor for autonomous movement. In an alternative embodiment of the invention, the distributed industrial system includes an interconnected transmission network or pipeline system for a continuous transport of fluids such as oil, gas, or water. The unmanned vehicle, eventually devoid of any motor and on-board fuel storage facility, is transported in a continuous stream of fluid matter, i.e. floating on a surface or submerged in the fluid.

In summary, distributed parts of an industrial process are inspected by an unmanned vehicle or mobile sensor platform equipped with appropriate sensors, with the control of the sensor and the signal returned by the vehicle being integrated into a SCADA system of the industrial process. Specifically, an operator is able to direct the UAV to ad-hoc inspection points of the distributed industrial, with an optimal or preferred route being determined automatically.

### DETAILED DESCRIPTION OF PREFERRED EMBODIMENTS

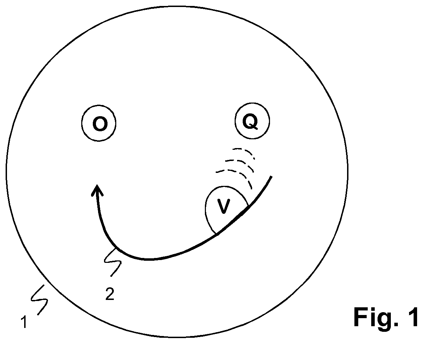

Fig.1 schematically shows a distributed industrial system (1) with two inspection points (Q, O) being distant from each other. An unmanned vehicle (V) is depicted in proximity to a first inspection point (Q), with a sensor mounted on the vehicle being about to obtain system information from the latter. The vehicle is about to move along a route or path (2) towards a second inspection point (O). The route has been determined previously by a SCADA system of the distributed industrial system (1) and connects in some optimal way a home base (not shown) of the vehicle and the two inspection points. The unmanned vehicle may also be equipped with actuators such as grippers for on-site remedial action.

While the invention has been described in detail in the drawings and foregoing description, such description is to be considered illustrative or exemplary and not restrictive. In the claims, the word "comprising" does not exclude other elements or steps, and the indefinite article "a" or "an" does not exclude a plurality.

## Claims

1. A Supervisory Control And Data Acquisition SCADA system for controlling a distributed industrial system (1) based on information obtained at inspection points (Q, O) of the system, wherein a distance between two inspection points exceeds a range of a system information obtaining sensor, comprising
- a routing module for determining a route (2) for an unmanned vehicle (V) to an inspection point (O, Q),
- the unmanned vehicle (V), which is equipped with a sensor for obtaining system information from the inspection point and adapted to move along the route (2) to the inspection point, and
- a sensor module for control of the sensor and for reception and processing of system information previously obtained and transmitted by the sensor, wherein the information returned by the vehicle (V) is integrated into the SCADA system of the industrial system (1).

2. The SCADA system of claim 1, wherein the SCADA system is adapted such that the inspection point (O, Q) is provided to the routing module by a human operator pointing to a target on a logical process picture of the distributed industrial system (1) on a SCADA screen.

3. The SCADA system of claim 1 or claim 2, wherein the SCADA system is adapted such that the inspection point (O, Q) is determined and communicated to the vehicle in an automated way, based on alarms or other events.

4. The SCADA system of any one of claims 1 to 3, wherein the SCADA system is adapted to control and/or monitor the distributed industrial system (1) that is an industrial plant and/or includes an extended transmission or transportation network of a utility.

5. The SCADA system of any one of claims 1 to 4, wherein the sensor is a camera, and wherein the SCADA system includes a display module for displaying pictures recorded by the camera to an operator.

6. The SCADA system of any one of claims 1 to 5, wherein the unmanned vehicle has a means of propulsion and control of vehicle movement according to the route determined by the routing module.

7. The SCADA system of any one of claims 1 to 5, wherein the SCADA system is adapted to control and/or monitor the distributed industrial system that includes an interconnected transmission network for a continuous transport of material and wherein the vehicle is adapted to be transported in a continuous stream of the material.

8. The SCADA system of any one of claims 1 to 7, wherein the unmanned vehicle (V) is adapted to move along a route to a second inspection point (O) spaced from the inspection point (Q) by a distance that exceeds the range of the sensor.

9. The SCADA system of any one of claims 1 to 8, wherein the SCADA system is adapted to monitor the distributed industrial system (1) based on the information obtained at the inspection points (Q, O) of the system.

10. A Supervisory Control And Data Acquisition SCADA system for monitoring a distributed industrial system (1) based on information obtained at inspection points (Q, O) of the system, wherein a distance between two inspection points exceeds a range of a system information obtaining sensor, comprising
- a routing module for determining a route (2) for an unmanned vehicle (V) to an inspection point (O, Q),
- the unmanned vehicle (V), which is equipped with a sensor for obtaining system information from the inspection point and adapted to move along the route (2) to the inspection point, and
- a sensor module for control of the sensor and for reception and processing of system information previously obtained and transmitted by the sensor,
wherein the SCADA system is adapted such that the inspection point (O, Q) is provided to the routing module by a human operator pointing to a target on a logical process picture of the distributed industrial system (1) on a SCADA screen.

11. A use of an unmanned vehicle (V) adapted to move along a predetermined route (2) to an inspection point (Q, O) and equipped with a sensor for obtaining system information from inspection points of a distributed industrial system (1), in a Supervisory Control And Data Acquisition SCADA system controlling the industrial system based on system information obtained at the inspection points and including a routing module for determining a route (2) for the unmanned vehicle (V) to an inspection point (O, Q) and a sensor module for control of the sensor and for reception and processing of system information previously obtained and transmitted by the sensor, wherein the information returned by the vehicle (V) is integrated into the SCADA system of the industrial system (1).

12. The use of claim 11, wherein the distributed industrial system (1) is an industrial plant and/or includes an extended transmission or transportation network of a utility.

13. The use of claim 11 or claim 12, wherein the unmanned vehicle (V) moves along a route to a second inspection point (O) spaced from the inspection point (Q) by a distance that exceeds the range of the sensor.

14. The use of any one of claims 11 to 13, wherein the SCADA system monitors the distributed industrial system (1) based on the information obtained at the inspection points (Q, O) of the system.

## Patentansprüche

1. Überwachungs-Steuerungs-und-Datenerfassungssystem, SCADA-System, zum Steuern eines verteilten industriellen Systems (1) abhängig von Informationen, die an Prüfpunkten (Q, O) des Systems erhalten werden, wobei ein Abstand zwischen zwei Prüfpunkten eine Reichweite eines Sensors zum Erhalten von Systeminformationen überschreitet, das Folgendes aufweist:
- ein Routenmodul zum Bestimmen einer Route (2) für ein unbemanntes Fahrzeug (V) zu einem Prüfpunkt (O, Q),
- das unbemannte Fahrzeug (V), das mit einem Sensor zum Erhalten von Systeminformationen vom Prüfpunkt ausgerüstet ist und ausgelegt ist, sich entlang der Route (2) zum Prüfpunkt zu bewegen, und
- ein Sensormodul zur Steuerung des Sensors und zum Empfangen und Verarbeiten von Systeminformationen, die vorher durch den Sensor erhalten und übertragen worden sind, wobei die durch das Fahrzeug (V) zurückgeschickten Informationen in das SCADA-System des industriellen Systems (1) integriert werden.

2. SCADA-System nach Anspruch 1, wobei das SCADA-System derart ausgelegt ist, dass der Prüfpunkt (O, Q) für das Routenmodul bereitgestellt wird, indem eine menschliche Bedienperson auf einem logischen Prozessbild des verteilten industriellen Systems (1) auf einem SCADA-Bildschirm auf ein Ziel zeigt.

3. SCADA-System nach Anspruch 1 oder Anspruch 2, wobei das SCADA-System derart ausgelegt ist, dass der Prüfpunkt (O, Q) auf automatisierte Weise auf der Grundlage von Alarmen oder anderen Ereignissen bestimmt und an das Fahrzeug kommuniziert wird.

4. SCADA-System nach einem der Ansprüche 1 bis 3, wobei das SCADA-System ausgelegt ist, das verteilte industrielle System (1), das eine Industrieanlage ist und/oder ein ausgedehntes Übertragungs- oder Beförderungsnetz einer Versorgungseinrichtung aufweist, zu steuern und/oder zu überwachen.

5. SCADA-System nach einem der Ansprüche 1 bis 4, wobei der Sensor eine Kamera ist und wobei das SCADA-System ein Anzeigemodul zum Anzeigen von durch die Kamera aufgenommenen Bildern für eine Bedienperson aufweist.

6. SCADA-System nach einem der Ansprüche 1 bis 5, wobei das unbemannte Fahrzeug ein Mittel zum Vortrieb und zur Steuerung der Fahrzeugbewegung gemäß der Route, die durch das Routenmodul bestimmt wird, aufweist.

7. SCADA-System nach einem der Ansprüche 1 bis 5, wobei das SCADA-System ausgelegt ist, das verteilte industrielle System, das ein gekoppeltes Übertragungsnetz für eine kontinuierliche Materialbeförderung aufweist, zu steuern und/oder zu überwachen, wobei das Fahrzeug ausgelegt ist, in einem kontinuierlichen Materialstrom befördert zu werden.

8. SCADA-System nach einem der Ansprüche 1 bis 7, wobei das unbemannte Fahrzeug (V) ausgelegt ist, sich entlang einer Route zu einem zweiten Prüfpunkt (O) zu bewegen, der um einen Abstand, der die Reichweite des Sensors überschreitet, vom Prüfpunkt (Q) beabstandet ist.

9. SCADA-System nach einem der Ansprüche 1 bis 8, wobei das SCADA-System ausgelegt ist, das verteilte industrielle System (1) abhängig von Informationen zu überwachen, die an den Prüfpunkten (Q, O) des Systems erhalten werden.

10. Überwachungs-Steuerungs-und-Datenerfassungssystem, SCADA-System, zum Überwachen eines verteilten industriellen Systems (1) abhängig von Informationen, die an Prüfpunkten (Q, O) des Systems erhalten werden, wobei ein Abstand zwischen zwei Prüfpunkten eine Reichweite eines Sensors zum Erhalten von Systeminformationen überschreitet, das Folgendes aufweist:
- ein Routenmodul zum Bestimmen einer Route (2) für ein unbemanntes Fahrzeug (V) zu einem Prüfpunkt (O, Q),
- das unbemannte Fahrzeug (V), das mit einem Sensor zum Erhalten von Systeminformationen vom Prüfpunkt ausgerüstet ist und ausgelegt ist, sich entlang der Route (2) zum Prüfpunkt zu bewegen, und
- ein Sensormodul zur Steuerung des Sensors und zum Empfang und zum Verarbeiten von Systeminformationen, die vorher durch den Sensor erhalten und übertragen worden sind,
wobei das SCADA-System derart ausgelegt ist, dass der Prüfpunkt (O, Q) dem Routenmodul bereitgestellt wird, indem eine menschliche Bedienperson auf einem logischen Prozessbild des verteilten industriellen Systems (1) auf einem SCADA-Bildschirm auf ein Ziel zeigt.

11. Verwendung eines unbemannten Fahrzeugs (V), das ausgelegt ist, sich entlang einer vorgegebenen Route (2) zu einem Prüfpunkt (Q, O) zu bewegen, und mit einem Sensor zum Erhalten von Systeminformationen von Prüfpunkten eines verteilten industriellen Systems (1) ausgestattet ist, in einem Überwachungs-Steuerungs-und-Datenerfassungssystem, SCADA-System, das das industrielle System abhängig von Systeminformationen steuert, die an den Prüfpunkten erhalten werden, und ein Routenmodul zum Bestimmen einer Route (2) für das unbemannte Fahrzeug (V) zu einem Prüfpunkt (O, Q) und ein Sensormodul zur Steuerung des Sensors und zum Empfang und zum Verarbeiten von Systeminformationen, die vorher durch den Sensor erhalten und übertragen worden sind, aufweist, wobei die durch das Fahrzeug (V) zurückgeschickten Informationen in das SCADA-System des industriellen Systems (1) integriert werden.

12. Verwendung nach Anspruch 11, wobei das verteilte industrielle System (1) eine Industrieanlage ist und/oder ein ausgedehntes Übertragungs- oder Beförderungsnetz einer Versorgungseinrichtung aufweist.

13. Verwendung nach Anspruch 11 oder Anspruch 12, wobei sich das unbemannte Fahrzeug (V) entlang einer Route zu einem zweiten Prüfpunkt (O) bewegt, der um einen Abstand, der die Reichweite des Sensors überschreitet, vom Prüfpunkt (Q) beabstandet ist.

14. Verwendung nach einem der Ansprüche 11 bis 13, wobei das SCADA-System das verteilte industrielle System (1) abhängig von den Informationen überwacht, die an den Prüfpunkten (Q, O) des Systems erhalten werden.

## Revendications

1. Système de télésurveillance et d'acquisition de données, SCADA, destiné à commander un système industriel distribué (1) d'après des informations obtenues en des points d'inspection (Q, O) du système, une distance entre deux points d'inspection dépassant la portée d'un capteur d'obtention d'informations de système, comportant
- un module de routage servant à déterminer un itinéraire (2) pour un véhicule sans équipage (V) jusqu'à un point d'inspection (O, Q),
- le véhicule sans équipage (V), qui est équipé d'un capteur servant à obtenir des informations de système à partir du point d'inspection et conçu pour se déplacer le long de l'itinéraire (2) jusqu'au point d'inspection, et
- un module de capteur servant à la commande du capteur et à la réception et au traitement d'informations de système précédemment obtenues et transmises par le capteur, les informations renvoyées par le véhicule (V) étant intégrées dans le système SCADA du système industriel (1).

2. Système SCADA selon la revendication 1, le système SCADA étant conçu de telle façon que le point d'inspection (O, Q) soit fourni au module de routage par un opérateur humain désignant une cible sur un diagramme logique de processus du système industriel distribué (1) sur un écran SCADA.

3. Système SCADA selon la revendication 1 ou la revendication 2, le système SCADA étant conçu de telle façon que le point d'inspection (O, Q) soit déterminé et communiqué au véhicule de manière automatisée, sur la base d'alarmes ou d'autres événements.

4. Système SCADA selon l'une quelconque des revendications 1 à 3, le système SCADA étant conçu pour commander et/ou surveiller le système industriel distribué (1) qui est une installation industrielle et/ou comprend un réseau étendu de transmission ou de transport d'une servitude.

5. Système SCADA selon l'une quelconque des revendications 1 à 4, le capteur étant une caméra, et le système SCADA comprenant un module d'affichage servant à présenter à un opérateur des images enregistrées par la caméra.

6. Système SCADA selon l'une quelconque des revendications 1 à 5, le véhicule sans équipage étant doté d'un moyen de propulsion et de commande de mouvement du véhicule selon l'itinéraire déterminé par le module de routage.

7. Système SCADA selon l'une quelconque des revendications 1 à 5, le système SCADA étant conçu pour commander et/ou surveiller le système industriel distribué qui comprend un réseau de transmission interconnecté destiné à un transport continu de matière et le véhicule étant conçu pour être transporté dans un flux continu de la matière.

8. Système SCADA selon l'une quelconque des revendications 1 à 7, le véhicule sans équipage (V) étant conçu pour se déplacer le long d'un itinéraire jusqu'à un second point d'inspection (O) séparé du point d'inspection (Q) par une distance qui dépasse la portée du capteur.

9. Système SCADA selon l'une quelconque des revendications 1 à 8, le système SCADA étant conçu pour surveiller le système industriel distribué (1) sur la base des informations obtenues aux points d'inspection (Q, O) du système.

10. Système de télésurveillance et d'acquisition de données, SCADA, destiné à surveiller un système industriel distribué (1) d'après des informations obtenues en des points d'inspection (Q, O) du système, une distance entre deux points d'inspection dépassant la portée d'un capteur d'obtention d'informations de système, comportant
- un module de routage servant à déterminer un itinéraire (2) pour un véhicule sans équipage (V) jusqu'à un point d'inspection (O, Q),
- le véhicule sans équipage (V), qui est équipé d'un capteur servant à obtenir des informations de système à partir du point d'inspection et conçu pour se déplacer le long de l'itinéraire (2) jusqu'au point d'inspection, et
- un module de capteur servant à la commande du capteur et à la réception et au traitement d'informations de système précédemment obtenues et transmises par le capteur,
le système SCADA étant conçu de telle façon que le point d'inspection (O, Q) soit fourni au module de routage par un opérateur humain désignant une cible sur un diagramme logique de processus du système industriel distribué (1) sur un écran SCADA.

11. Utilisation d'un véhicule sans équipage (V) conçu pour se déplacer le long d'un itinéraire (2) prédéterminé jusqu'à un point d'inspection (Q, O) et équipé d'un capteur servant à obtenir des informations de système à partir de points d'inspection d'un système industriel distribué (1), dans un système de télésurveillance et d'acquisition de données, SCADA, commandant le système industriel sur la base d'informations de système obtenues aux points d'inspection et comprenant un module de routage servant à déterminer un itinéraire (2) pour le véhicule sans équipage (V) jusqu'à un point d'inspection (O, Q) et un module de capteur servant à la commande du capteur et à la réception et au traitement d'informations de système précédemment obtenues et transmises par le capteur, les informations renvoyées par le véhicule (V) étant intégrées dans le système SCADA du système industriel (1) .

12. Utilisation selon la revendication 11, le système industriel distribué (1) étant une installation industrielle et/ou comprenant un réseau étendu de transmission ou de transport d'une servitude.

13. Utilisation selon la revendication 11 ou la revendication 12, le véhicule sans équipage (V) se déplaçant le long d'un itinéraire jusqu'à un second point d'inspection (O) séparé du point d'inspection (Q) par une distance qui dépasse la portée du capteur.

14. Utilisation selon l'une quelconque des revendications 11 à 13, le système SCADA surveillant le système industriel distribué (1) sur la base des informations obtenues aux points d'inspection (Q, O) du système.
